# EUROPÄISCHE PATENTSCHRIFT

(11) **EP 1 522 509 B1**
(45) Veröffentlichungstag und Bekanntmachung des Hinweises auf die Patenterteilung: **24.05.2006**
(21) Anmeldenummer: 04400028.9
(22) Anmeldetag: 19.05.2004
(51) Int. Cl.: B65G 57/06, B65G 57/30

(54) **Vorrichtung zum Stapeln von flachen Produkten**
Device for stacking flat products
Appareil d'empilage de produits plats

(30) Priorität: 06.10.2003 DE 10347166
(43) Veröffentlichungstag der Anmeldung: 13.04.2005
(73) Patentinhaber: Wilhelm Bahmüller Maschinenbau-Präzisionswerkzeuge GmbH, 73655 Plüderhausen (DE)
(72) Erfinder: Furthmüller, Stefan, 73642 Welzheim-Breitenfürst (DE)
(74) Vertreter: Dreiss, Fuhlendorf, Steimle & Becker

(56) Entgegenhaltungen:
- EP-A1- 0 359 920

## Beschreibung

Die Erfindung betrifft eine Vorrichtung zum Stapeln von flachen Produkten, insbesondere von Faltschachteln, mit einem die flachen Produkte aufnehmenden Stapelschacht, welcher eine Einführöffnung aufweist, der eine Prallfläche gegenüberliegt, und mit in Seitenwangen angeordneten Führungselementen versehen ist, welche die flachen Produkte als Stapel führen.

Es ist bekannt (EP-A-0 35.9 920), dass Produktionsanlagen von Faltschachteln in einem Stapelschacht enden, in welchem die hergestellten Faltschachteln zu Paketen gestapelt und aus dem die Pakete entnommen werden. Aufgrund der unterschiedlichsten Formen und Größen sowie Faltungen der Faltschachteln besteht das Bedürfnis, dass diese Faltschachteln entweder nach unten oder nach oben gestapelt werden müssen. Bei einer relativ ebenen und glatten Oberseite wird in der Regel nach unten gestapelt (down-stacking), wobei dies nicht möglich ist, wenn die Oberseite der Faltschachtel entweder nicht eben ist oder zuschnittbedingte Stufen aufweist. Eine nachfolgende Faltschachtel könnte dann an einer dieser Stufen hängen bleiben und verkanten. Daher werden derartige Faltschachteln in der Regel nach oben gestapelt, wobei jede nachfolgende Faltschachtel unter die zuvor abgelegte Faltschachtel geschoben wird (up-stacking).

Es kommt nun vor, dass bei einem Produktwechsel von der einen zur anderen Faltschachtel auch die Stapelart geändert werden muss. Hierfür ist es erforderlich, den Stapelschacht ebenfalls auszuwechseln, so dass in die andere Richtung gestapelt werden kann. Dies ist nicht nur zeit- sondern auch personalaufwändig und daher kostenintensiv.

Der Erfindung liegt daher die Aufgabe zugrunde, eine Vorrichtung zum Stapeln von flachen Produkten der eingangs genannten Art so auszubilden, dass die Faltschachteln weniger zeit- und personalintensiv stapelbar sind.

Diese Aufgabe wird erfindungsgemäß mit einer Vorrichtung gelöst, die die Merkmale des Anspruchs 1 aufweist.

Bei der erfindungsgemäßen Stapelvorrichtung kann das Tablett, mit welchem die flachen Produkte transportiert werden, sowohl nach oben als auch nach unten verfahren werden. Beim Nachunten-Stapeln wird dieser Stapel auf den beiden Tabletts, von denen an jeder Seitenwange eines vorgesehen ist, gebildet. Auf diesen Tabletts liegt das unterste flache Produkt des Stapels auf und auf diesen Stapel werden die nachfolgenden Produkte aufgelegt. Dabei fahren die Tabletts nach unten. Beim Nach-oben-Stapeln wird unter den Stapel jeweils ein flaches Produkt untergeschoben und das Produktpaket wird mittels der Tabletts nach oben angehoben, sobald die erforderliche Anzahl an Produkten abgestapelt worden sind.

Bei einer Weiterbildung ist vorgesehen, dass das Tablett kontinuierlich und/oder schrittweise und insbesondere mit unterschiedlichen Geschwindigkeiten verfahrbar ist. Werden die Tabletts kontinuierlich abgesenkt, so kann entsprechend der Absenkgeschwindigkeit der Stapel durch nachfolgend aufgelegte, flache Produkte aufgebaut werden. Bei einem schrittweisen Absenken der Tabletts können die flachen Produkte auch diskontinuierlich zugeführt werden, ohne dass es zu Störungen im Betriebsablauf kommt. Sobald der Stapel zu einem Paket komplettiert wurde, können die Tabletts mit erhöhter Geschwindigkeit verfahren werden, so dass zum einen das Paket aus der Stapelzone heraustransportiert wird, zum anderen zwei neue Tabletts zum Aufbau eines neuen Stapels herangeführt werden. Die Zufuhr neuer flacher Produkte muss daher lediglich für sehr kurze Zeit unterbrochen werden.

Mit Vorzug weist die Transporteinrichtung zwei nebeneinander liegende Ketten auf, die einen an einer Führungsschiene verfahrbaren Wagen antreiben. Es ist auch denkbar, dass anstelle von Ketten Bänder oder andere umlaufende Transportmittel verwendet werden können, sofern diese geeignet sind, präzise gesteuert werden zu können, und Tragkräfte übertragen zu können. Der mit den Ketten verbundene Wagen trägt jeweils ein Tablett, auf welchem der Stapel aufliegt.

Um auch flache Produkte, insbesondere Faltschachteln, problemlos stapeln zu können, die im Wesentlichen eine Keilform besitzen, zum Beispiel einen dickeren, vorderen Bereich und ein dünnes, hinteres Ende aufweisen, ist erfindungsgemäß vorgesehen, dass das Tablett am Wagen schwenkbar gelagert ist. Auf diese Weise kann der Boden des Stapels, während dieser allmählich nach unten abgesenkt wird, auch so geneigt werden, dass genügend Raum für die dickeren Abschnitte der flachen Produkte zur Verfügung stehen. Die flachen Produkte können daher nach wie vor in waagerechter Richtung auf den sich bildenden Stapel oben aufgelegt werden.

Bei einer Weiterbildung ist vorgesehen, dass am Tablett ein Schwenkhebel befestigt ist, über welchen das Tablett um ein Schwenklager verschwenkbar ist. Dieser Hebel dient dazu, den Boden entweder einmalig oder allmählich zu verschwenken, so dass ein prismatischer Schacht mit geneigtem Boden zur Aufnahme der flachen Produkte gebildet wird.

Zum Verschwenken des Schwenkhebels weist dieser erfindungsgemäß an seinem freien Ende eine Tastrolle auf, wobei die Tastrolle von einer Nocke, einer Rampe, einer Zwangsführung oder dergleichen ausgelenkt wird. Bewegt sich das Tablett in vertikaler Richtung, dann fährt der Schwenkhebel mit seiner Tastrolle an einer Nocke oder Rampe entlang, wobei die Tastrolle durch die Nocke oder die Rampe aus seiner Ruhelage herausbewegt und dadurch der Schwenkhebel verschwenkt wird. Auf diese Weise wird das Tablett aus seiner Ruhelage heraus in eine Schrägstellung verschwenkt und der Boden des Stapelschachtes gekippt. Das Schwenken kann auch über einen eigenen Antrieb erfolgen.

Um ein unbeabsichtigtes Kippen des Tabletts aus seiner Ruhelage heraus zu vermeiden, ist das Tablett in Richtung seiner waagerechten Ruhelage federbelastet. Diese Feder sorgt dafür, dass das Tablett bei nicht über die Nocke, die Rampe oder dergleichen ausgelenktem Schwenkhebel stets seine waagerechte Ruhelage einnimmt, so dass der Produktstapel senkrecht über dem Tablett sich befindet.

Um die erfindungsgemäße Vorrichtung auf einfache Weise sowohl für keilförmige als auch für gleichmäßige Produkte einstellen zu können, ist die Nocke beziehungsweise Rampe in die Fahrstrecke der Tastrolle einfahrbar beziehungsweise aus dieser zumindest teilweise herausfahrbar. Sollen gleichmäßige Produkte abgelegt werden, bei denen es nicht erforderlich ist, dass die Tabletts verschwenkt werden, dann wird die Nocke oder die Rampe so weit verlagert, dass kein Angriff an der Tastrolle stattfindet. Dadurch wird der Schwenkhebel nicht verschwenkt und die Tabletts verbleiben in ihrer waagerechten Ruhelage. Befindet sich die Nocke beziehungsweise Rampe jedoch mehr oder weniger weit in der Fahrstrecke der Tastrolle, das heißt im Eingriffsbereich der Tastrolle, dann wird der Schwenkhebel mehr oder weniger weit verschwenkt, und dadurch werden die Tabletts geneigt.

Um unterschiedlich keilförmige Produkte gleichermaßen gut abstapeln zu können, ist die Neigung der Nocke oder Rampe verstellbar ausgebildet. Dies bedeutet, dass die Tabletts bei gleichem Vorschub mehr oder weniger weit geneigt werden können. Dadurch können geringfügig keilförmige Produkte genauso gut abgelegt werden, wie Produkte, die eine extreme Keilform besitzen.

Mit Vorzug ist ein Sensor zum Erfassen der Stapelhöhe vorgesehen, wobei das Sensorsignal zur Ansteuerung der Transporteinrichtung dient. Dadurch können die Tabletts schrittweise um den Betrag abgesenkt werden, der der Höhe des zuvor auf den Stapel aufgelegten Produkts entspricht.

Bei einem Ausführungsbeispiel ist vorgesehen, dass die Tabletts das flache Produkt im Bereich seiner gegenüberliegenden Seitenränder unterstützt. Das flache Produkt und somit der gesamte Stapel wird also nicht vollflächig untergriffen, sondern lediglich im Bereich seines rechten und linken Seitenrandes abgestützt. Diese Abstützung ist so bemessen, dass das Produkt nicht durchhängt, sondern sicher gehalten wird. Die lediglich seitliche Abstützung hat den wesentlichen Vorteil, dass das fertig gebildete Paket an seiner Unterseite von einer Entnahmevorrichtung gegriffen werden kann, ohne dass das Paket zuvor von den Tabletts entfernt werden muss.

Mit Vorzug befindet sich am unteren Ende des Stapelschachtes eine Ablagevorrichtung für das Produktpaket, wobei die Tabletts die Ablagevorrichtung kollisionsfrei passieren. Die Tabletts legen also den fertig gebildeten Stapel auf der Ablagevorrichtung ab, so dass dieser von dort von einer Greifvorrichtung gegriffen und abtransportiert werden kann. Dabei wird der Stapel stets von entsprechenden Führungselementen geführt, die diesen bis zu seinem Abtransport gegen Verrutschen halten.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine Seitenansicht eine Abzugseinheit mit einer Stapelvorrichtung;
- Figur 2: eine Ansicht in Richtung des Pfeils II gemäß Figur 1 auf einen Teil der Stapelvorrichtung;
- Figur 3: einen schematisch dargestellten Ablauf beim Nach-oben-Stapeln;
- Figur 4: eine schematische Darstellung des Kippverlaufs eines Tabletts;
- Figur 5: das Tablett in gekippter und in waagerechter Stellung; und
- Figur 6: eine Ansicht in Richtung des Pfeils VI gemäß Figur 5.

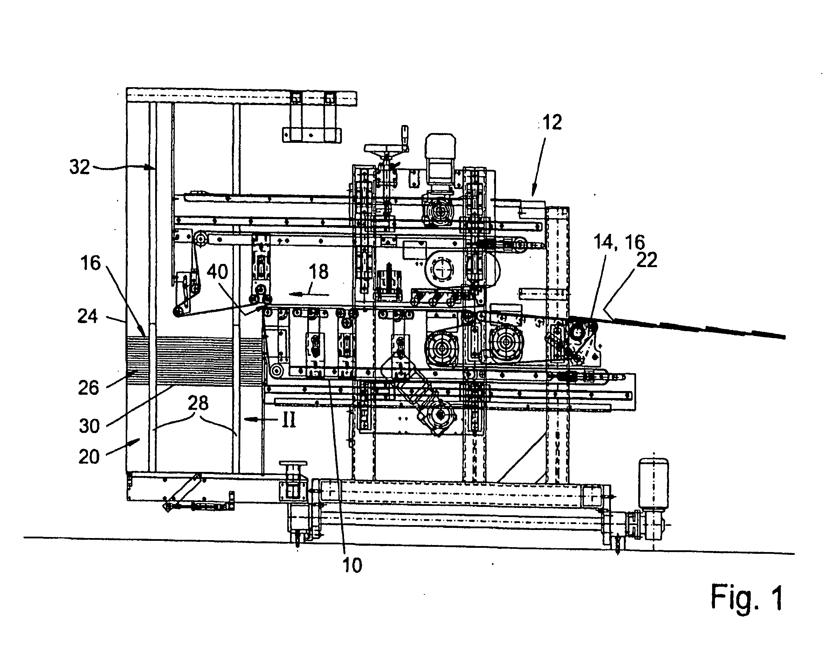

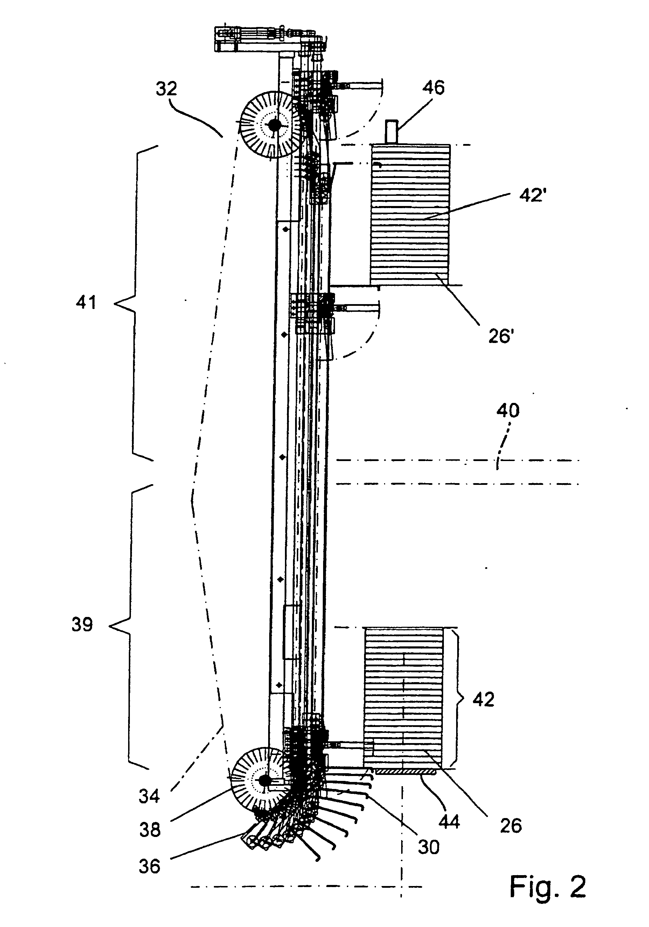

In der Figur 1 ist mit dem Bezugszeichen 10 ein Abzugsband bezeichnet, welches in einer insgesamt mit 12 bezeichneten Vorrichtung zum Transportieren von flachen Produkten 14, insbesondere von Faltschachteln 16, umläuft. Die vereinzelten Faltschachteln 16 werden in Transportrichtung (Pfeil 18) mit hoher Geschwindigkeit in einen Stapelschacht 20 transportiert. Dabei prallen die Faltschachteln 16 mit ihren Vorderkanten 22 an eine Prallfläche 24 und werden dadurch abgebremst. In der Figur 1 ist eine Vorrichtung 12 dargestellt, in welcher nach unten gestapelt wird, das heißt es wird ein Stapel 26 aus übereinander liegenden Faltschachteln 16 nach unten gebildet. Dieser Stapel 26 wird von Führungselementen 28 seitlich geführt, was nachfolgend näher beschrieben wird. Der Stapel 26 wird auf einem Tablett 30 aufgebaut und von diesem getragen. Dieses Tablett 30 befindet sich an einer Transporteinrichtung 32, welche andeutungsweise in der Figur 1 und im Einzelnen in der Figur 2 dargestellt ist. Diese Transporteinrichtung 32 besitzt eine umlaufende Kette 34, an welcher ein Wagen 36 und das Tablett 30 befestigt sind. In der Figur 2 sind verschiedene Stellungen des Wagens 36 dargestellt, der von der Kette 34 um eine untere Umlenkrolle 38 geführt wird. Insgesamt sind an der Kette 34 drei derartige Wagen 36 in gleichmäßigen Abständen befestigt. Am Wagen 36 befindet sich das Tablett 30, auf welchem der Stapel 26 aufsitzt. Der Wagen 36 wird an seinen Längsseiten von zwei Ketten 34 gehalten und geführt, wobei die Ketten 34 in den Führungselementen 28 untergebracht sind.

In der Figur 2 sind die beiden Stapelarten, nämlich das Nach-unten-Stapeln 39 und das Nach-oben-Stapeln 41 dargestellt, wobei der untere Stapel 26 dadurch gebildet wird, dass Faltschachteln 16 durch eine Einführöffnung 40 in den Stapelschacht 20 transportiert und oben auf dem Stapel 26 abgelegt werden. Der Stapel 26 wird dann durch eine Verlagerung des Wagens 36 nach unten um die Dicke der Faltschachtel 16 abgesenkt, so dass die nachfolgende Faltschachtel 16 wieder oben auf dem Stapel 26 abgelegt werden kann. Besitzt der Stapel 26 die maximale Stapelhöhe und ist das Paket 42 fertiggestellt, dann wird es durch Absenken des Wagens 36 in seine unterste Position verlagert, so dass das Paket 42 aus dem Stapelschacht entnommen werden kann. Dabei liegt das Paket 42 auf einer Auflage 44 auf, so dass der Wagen 36 weiterverfahren werden kann, und das Tablett 30 vom Paket 42 entlastet wird. Der nächste Wagen 36 wird mit erhöhter Geschwindigkeit von oben kommend im Bereich der Einführöffnung 40 positioniert, dass die erste Faltschachtel 16 des neuen Stapels 26 auf dessen Tablett 30 abgelegt werden kann. Sodann fährt dieser Wagen 36 wieder mit verminderter Geschwindigkeit mittels einer Lichtschranke sensorgesteuert nach unten.

Beim Nach-oben-Stapeln 41 wird der Stapel 26' ohne Tablett 30 gebildet, da nachfolgende Faltschachteln 16 stets unten an den Stapel 26' angelegt werden. Hierfür erstreckt sich das die Faltschachtel 16 heranführende Abzugsband 10, nicht wie in Figur 1 dargestellt, bis in den Bereich der Prallfläche 24. Hierdurch wird sichergestellt, dass die Faltschachtel 16 sicher unter den Stapel 26' geschoben wird. Seitlich neben dem Abzugsband 10 befinden sich die beiden Tabletts 30, d.h. zwischen den Tabletts 30 liegt das Abzugsband 10. Die Tabletts 30 sind jedoch beim Nach-oben-Stapeln 41 nur für den Abtransport des fertigen Stapels 26' notwendig, nicht für den Stapelvorgang selbst, wie beim Nach-unten-Stapeln 39.

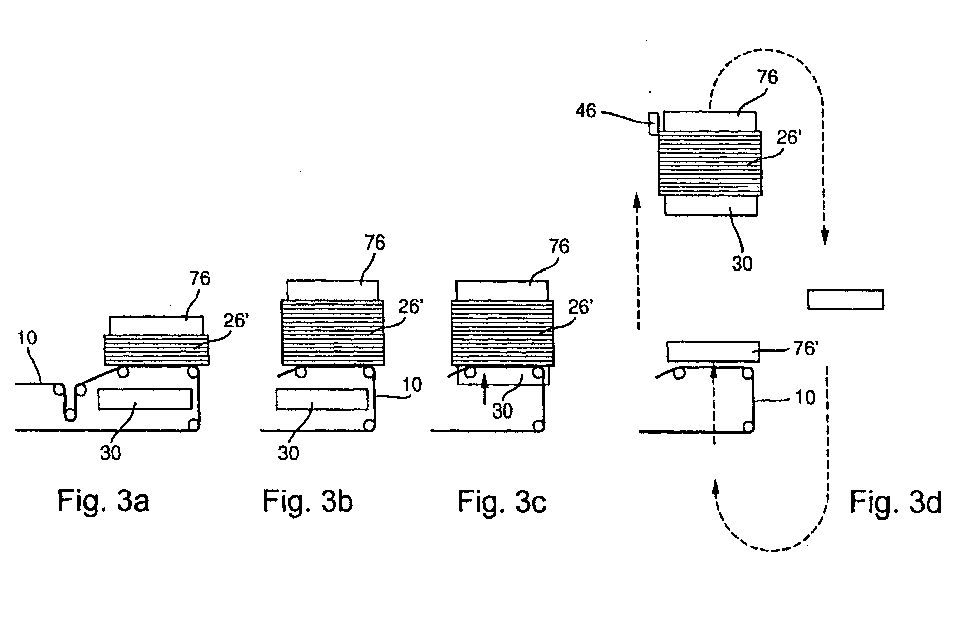

Die Transporteinrichtung 32 ist mit einer zweiten Kette (nicht dargestellt) versehen, an der ein auf dem Stapel 26' aufliegender Niederhalter 76 befestigt ist(Figur 3). Sobald eine Faltschachtel 16 unter das Paket 26' geschoben worden ist, wird der Niederhalter 76 durch Transport der zweiten Kette um die Dicke der Faltschachtel 16 angehoben, was in den Figuren 3a und 3b dargestellt ist.

Besitzt der Stapel 26' seine maximale Stapelhöhe, dann wird das Paket 42' dadurch nach oben verfahren, dass der Wagen 36 mit dem Tablett 30 aus einer Wartestellung unten an das fertige Paket 42' herangefahren wird (Figur 3c) und dieses mit hoher Geschwindigkeit so weit anhebt, bis dieses an einem Anschlag 46 zur Anlage kommt (Figur 3d). Sobald das Paket 42' aus dem Stapelbereich herausgefahren wurde, beginnt die Bildung eines neuen Stapels 26'. Zuvor wird der nachfolgende Niederhalter 76' aus seiner Wartestellung unterhalb des Abzugsbandes 10 mit hoher Geschwindigkeit in eine Position oberhalb des Abzugsbandes 10 gebracht, so dass die erste Faltschachtel 16 unter diesen Niederhalter 76' geschoben werden kann. Der Niederhalter 76' wird dann sensorgesteuert wieder schrittweise um die Dicken der zugeführten Faltschachteln 16 angehoben und der nächste Stapel 26' gebildet.

Zwischenzeitlich wird das fertige Paket 42' in der oberen Position mittels eines geeigneten Greifers abgeholt, so dass das Tablett 30 wieder frei ist. Der Wagen 36 fährt dann mit dem frei gewordenen Tablett in eine Ausgangsstellung so dass das nächste Tablett 30, wie in den Figuren 3a und 3b dargestellt, mit Abstand unter dem sich bildenden Stapel 26' wartet.

Der Niederhalter kann auch beim Nach-unten-Stapeln 39 verwendet werden, indem er mit Abstand an den sich bildenden Stapel 26 herangefahren wird und einen Spalt frei lässt, so dass die Faltschachtel 16 noch zwischen Stapel 26 und Niederhalter geschoben werden kann. Dies kann bei Faltschachteln mit sehr ungleichmäßiger Dicke von Vorteil sein.

Auf jeden Fall kann der Wagen 36 sowohl nach unten, das heißt für das Nach-unten-Stapeln 39, als auch nach oben, nämlich zum Nach-oben-Stapeln 41, bewegt werden. Es bedarf also bei einem Wechsel der Faltschachtel 16 nicht mehr eines Wechsels des Stapelschachtes 20, mit dem die andere Faltschachtel 16 nach der anderen Stapelart gestapelt werden kann. Es können beide Stapelarten im gleichen Stapelschacht 20 durchgeführt werden.

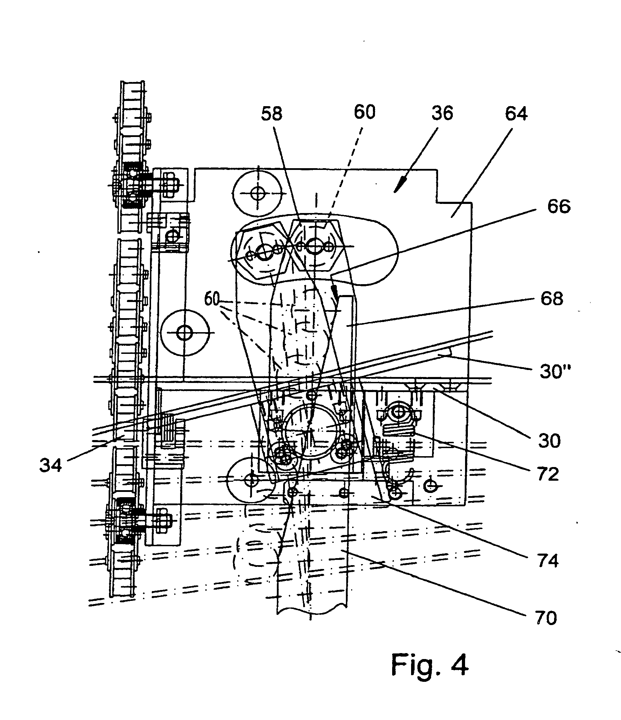

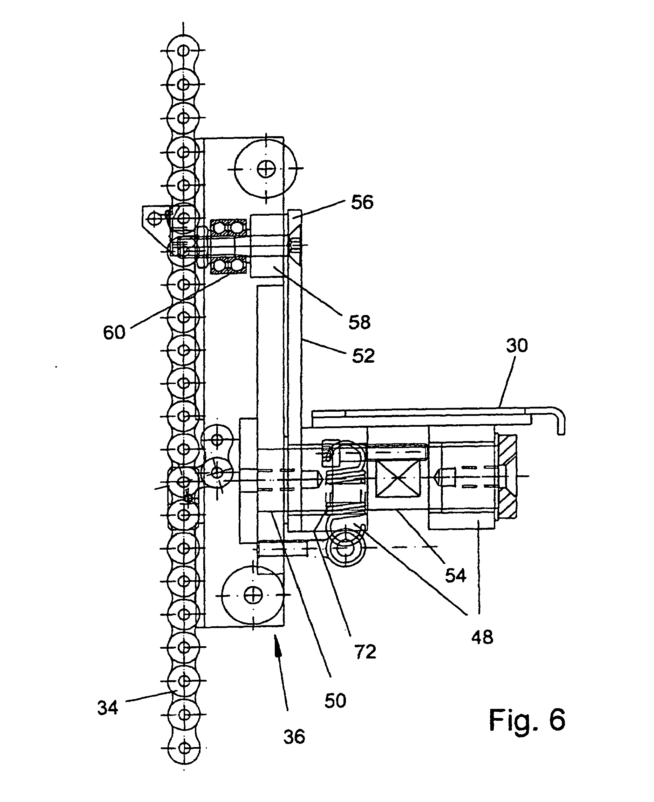

Die Figuren 4, 5, 6 zeigen den Wagen 36, an welchem das Tablett 30 sowohl in waagerechter Position als auch in verschwenkter Position 30'' dargestellt ist. Das Tablett 30 ist hierfür an einem Lagerbock 48 befestigt, der um ein Schwenklager 50 verschwenkbar ist. Außerdem ist am Lagerbock 48 ein Schwenkhebel 52 fixiert, der zusammen mit dem Lagerbock 48 ebenfalls um das Schwenklager 50 verschwenkbar ist. Für die Verschwenkung dient eine Welle 54, welche den Lagerbock 48 durchsetzt.

Am freien Ende 56 des Schwenkhebels 52 befindet sich ein Sechskantbolzen 58 mit einer Tastrolle 60, wobei der Sechskantbolzen 58 mit der Tastrolle 60 eine nierenförmige Öffnung 62 in einer Seitenwand 64 des Wagens 36 durchgreift. Aus den Figuren 4, 5 und 6 ist außerdem erkennbar, dass der Wagen 36 an der Kette 34 befestigt ist.

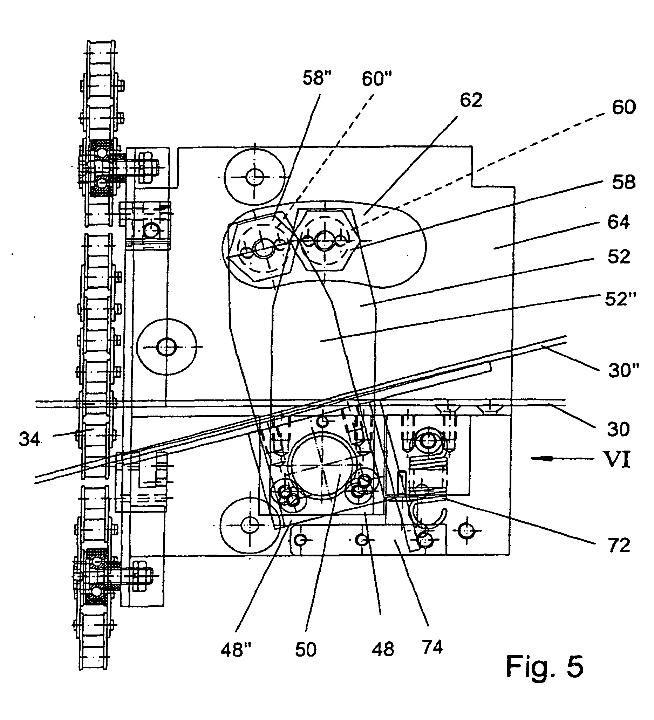

Wird der Wagen 36, wie in Figur 4 dargestellt, allmählich nach unten bewegt, dann kommt die Tastrolle 60 an eine Schrägfläche 66 einer Rampe 68 zur Anlage und wird von dieser Rampe 68 allmählich nach links ausgelenkt. Dies ist durch eine größere Anzahl von Positionen der Tastrolle 60 dargestellt. Durch das Auslenken der Tastrolle 60 nach links wird der Schwenkhebel 52 entgegen des Uhrzeigersinns verschwenkt, was ebenfalls in Figur 4 und in Figur 5 dargestellt ist. Nachfolgend ist die verschwenkte Lage mit zwei-gestrichenen Bezugszeichen bezeichnet. Durch das Verschwenken des Schwenkhebels 52'' wird auch der Lagerbock 48'' verschwenkt, wodurch das Tablett 30'' geneigt wird. Auf diese Weise können Faltschachteln 16 auf dem Tablett 30'' abgelegt werden, die einen im Wesentlichen keilförmigen Querschnitt aufweisen.

Die Schrägfläche 66 geht in eine gerade Fläche 70 über, nachdem die maximale Neigung des Schwenkhebels 52 (15°) erreicht ist. Am unteren Ende der Rampe 68 wird durch eine entsprechend zurücklaufende Schrägfläche (nicht dargestellt) der Schwenkhebel 52 wieder in seine Ausgangslage zurückverschwenkt, in welcher das Tablett 30 wieder seine waagerechte Lage einnimmt.

Die waagerechte Lage stellt eine stabile Ruhelage des Tabletts 30 dar. In dieser Lage wird das Tablett 30 von einer Zugfeder 72 gehalten, die einerseits an der Seitenwand 64, andererseits an einem Halter an der Unterseite des Tabletts 30 befestigt ist. Über die Zugfeder 72 wird das Tablett 30 in der waagerechten Ruhelage gehalten und liegt an einem Anschlag 74 an. Von diesem Anschlag 74 wird das Tablett 30 lediglich dann abgehoben, wenn der Schwenkhebel 52 ausgelenkt, das heißt aktiv verschwenkt wird. Auf diese Weise können dann problemlos Faltschachteln 16 gestapelt werden, die einen im Wesentlichen keilförmigen Querschnitt aufweisen.

## Patentansprüche

1. Vorrichtung zum Stapeln von flachen Produkten (14), insbesondere von Faltschachteln (16), mit einem die flachen Produkte (14) aufnehmenden Stapelschacht (20), welcher eine Einführöffnung (40) aufweist, der eine Prallfläche (24) gegenüberliegt, und mit in Seitenwangen angeordneten Führungselementen (28) versehen ist, welche die flachen Produkte (14) als Stapel (26) führen, **dadurch gekennzeichnet, dass** in den beiden parallel zur Zuführrichtung Faltschachteln (16) ausgerichteten Seitenwangen jeweils eine Transporteinrichtung (32) vorgesehen ist, mit der jeweils ein in den Stapelschacht (20) hineinragendes und flache Produkte (14) tragendes Tablett (30) vertikal in beide Richtungen verfahrbar ist.

2. Vorrichtung nach Anspruch 1, **dadurch gekennzeichnet, dass** das Tablett (30) kontinuierlich und/oder schrittweise und insbesondere mit unterschiedlichen Geschwindigkeiten verfahrbar ist.

3. Vorrichtung nach einem der vorhergehenden Ansprüche, **dadurch gekennzeichnet, dass** die Transporteinrichtung (32) zwei nebeneinander liegende Ketten (34) aufweist, die einen an einer Führungsschiene verfahrbaren Wagen (36) antreiben.

4. Vorrichtung nach Anspruch 3, **dadurch gekennzeichnet, dass** das Tablett (30) am Wagen (36) verschwenkbar gelagert ist.

5. Vorrichtung nach einem der vorhergehenden Ansprüche, **dadurch gekennzeichnet, dass** am Tablett (30) ein Schwenkhebel (52) befestigt ist, über welchen das Tablett (30) um ein Schwenklager (52) verschwenkbar ist.

6. Vorrichtung nach Anspruch 5, **dadurch gekennzeichnet, dass** der Schwenkhebel (52) an seinem freien Ende eine Tastrolle (60) aufweist, und die Tastrolle (60) von einer Nocke, eine Rampe (68), einer Zwangsführung oder dergleichen auslenkbar ist.

7. Vorrichtung nach einem der Ansprüche 4 bis 6, **dadurch gekennzeichnet, dass** das Tablett (30) in Richtung seiner waagerechten Ruhelage federbelastet ist.

8. Vorrichtung nach Anspruch 6 oder 7, **dadurch gekennzeichnet, dass** die Nocke oder Rampe (68) in die Fahrstrecke der Tastrolle (60) einfahrbar beziehungsweise aus dieser vollständig oder teilweise herausfahrbar ist.

9. Vorrichtung nach einem der Ansprüche 6 bis 8, **dadurch gekennzeichnet, dass** die Neigung der Nocke oder Rampe (68) verstellbar ist.

10. Vorrichtung nach einem der vorhergehenden Ansprüche, **dadurch gekennzeichnet, dass** ein Sensor zum Erfassen der Stapelhöhe vorgesehen ist und das Sensorsignal zur Ansteuerung der Transporteinrichtung (32) dient.

11. Vorrichtung nach einem der vorhergehenden Ansprüche, **dadurch gekennzeichnet, dass** die Tabletts (30) das flache Produkt (14) im Bereich seiner gegenüberliegenden Seitenränder unterstützt.

12. Vorrichtung nach einem der vorhergehenden Ansprüche, **dadurch gekennzeichnet, dass** am unteren Ende des Stapelschachtes (20) eine Ablagevorrichtung für das Produktpaket (42) vorgesehen ist und dass die Tabletts (30) die Ablagevorrichtung kollisionsfrei passieren.

13. Vorrichtung nach Anspruch 12, **dadurch gekennzeichnet, dass** die Ablagevorrichtung einen Niederhalter für das Produktpaket (42) aufweist.

14. Vorrichtung nach einem der vorhergehenden Ansprüche, **dadurch gekennzeichnet, dass** der Stapelschacht (20) im Bereich seiner Entnahmeöffnungen aufklappbare Führungsleisten für das Produktpaket (42) aufweist.

## Claims

1. Device for stacking flat products (14), in particular, folding boxes (16), comprising a stack shaft (20) for receiving the flat products (14), having an inlet opening (40) which is opposite to an impinging surface (24), and guiding elements (28) disposed in side flanks, which guide the flat products (14) to form a stack (26), **characterized in that** each of the two side flanks aligned parallel to the feeding direction of the folding boxes (16) comprises a transport means (32), each moving a tray (30) projecting into the stack shaft (20) and carrying flat products (14) vertically in both directions.

2. Device according to claim 1, **characterized in that** the tray (30) can be moved continuously and/or in steps and, in particular, at different speeds.

3. Device according to any one of the preceding claims, **characterized in that** the transport means (32) comprises two adjacent chains (34) which drive a carriage (36) which can be moved on a guiding rail.

4. Device according to claim 3, **characterized in that** the tray (30) is pivotably disposed on the carriage (36).

5. Device according to any one of the preceding claims, **characterized in that** a pivot lever (52) is mounted to the tray (30) by means of which the tray (30) can be pivoted about a pivot bearing (52).

6. Device according to claim 5, **characterized in that** the free end of the pivot lever (52) has a feeler roller (60), the feeler roller (60) being deflectable by a cam, a ramp (68), a forced guidance or the like.

7. Device according to any one of the claims 4 through 6, **characterized in that** the tray (30) is spring-loaded in the direction of its horizontal rest position.

8. Device according to claim 6 or 7, **characterized in that** the cam or ramp (68) can be retracted in the path of travel of the feeler roller (60) and can be completely or partially removed therefrom, respectively.

9. Device according to any one of the claims 6 through 8, **characterized in that** the inclination of the cam or ramp (68) can be adjusted.

10. Device according to any one of the preceding claims, **characterized in that** a sensor is provided for detecting the stack height, wherein the sensor signal serves to control the transport means (32).

11. Device according to any one of the preceding claims, **characterized in that** the tray (30) supports the flat product (14) in the region of its opposite side edges.

12. Device according to any one of the preceding claims, **characterized in that** a disposal device for the product pile (42) is provided at the lower end of the stack shaft (20) and the trays (30) pass the disposal device without collision.

13. Device according to claim 12, **characterized in that** the disposal device comprises a means for holding down the product pile (42).

14. Device according to any one of the preceding claims, **characterized in that** unfoldable guiding strips for the product pile (42) are provided in the region of the removal openings of the stack shaft (20).

## Revendications

1. Dispositif d'empilage de produits plats (14), en particulier de boîtes pliantes, qui comporte une cage d'empilage (20) destinée à recevoir les produits plats (14), comportant une ouverture d'introduction (40) en face de laquelle est disposée une surface de butée (24) et comportant des éléments de guidage (28) agencés dans des joues latérales qui guident les produits plats (14) disposés en empilage (26), **caractérisé en ce que** dans chacune des deux joues latérales, parallèles à la direction d'acheminement des boîtes pliantes (16) est prévu un dispositif de transport (32), par lequel respectivement, une palette (30), portant les produits plats (14) et s'avançant dans la cage d'empilage (20), peut se déplacer verticalement dans les deux sens.

2. Dispositif selon la revendication 1, **caractérisé en ce que** la palette (30) peut se déplacer en continu et/ou pas à pas et en particulier, à des vitesses différentes.

3. Dispositif selon l'une quelconque des revendications précédentes, **caractérisé en ce que** le dispositif de transport (32) comporte deux chaînes (34), disposées l'une à côté de l'autre, qui entraînent un chariot (36) mobile le long d'un rail de guidage.

4. Dispositif selon la revendication 3, **caractérisé en ce que** la palette (30) est montée pivotante sur le chariot (36).

5. Dispositif selon l'une quelconque des revendications précédentes, **caractérisé en ce qu'**un levier pivotant (52) est fixé contre la palette (30), par l'intermédiaire duquel la palette (30) peut pivoter autour d'un palier de pivotement (50).

6. Dispositif selon la revendication 5, **caractérisé en ce que** le levier pivotant (52) comporte à son extrémité libre un galet palpeur (60) et ledit galet palpeur (60) peut être dévié par l'intermédiaire d'une came, d'une rampe (68), d'un guidage forcé ou autre moyen similaire.

7. Dispositif selon l'une quelconque des revendications 4 à 6, **caractérisé en ce que** la palette (30) est sollicitée par un ressort vers sa position de repos horizontale.

8. Dispositif selon la revendication 6 ou 7, **caractérisé en ce que** la came ou la rampe (68) peut s'engager dans la trajectoire du galet palpeur (60), ou sortir intégralement ou partiellement de celle-ci.

9. Dispositif selon l'une quelconque des revendications 6 à 8, **caractérisé en ce que** l'inclinaison de la came ou de la rampe (68) est réglable.

10. Dispositif selon l'une quelconque des revendications précédentes, **caractérisé en ce qu'**un capteur est prévu pour détecter la hauteur de l'empilage et le signal du capteur est destiné à activer le dispositif de transport (32).

11. Dispositif selon l'une quelconque des revendications précédentes, **caractérisé en ce que** la palette (30) supporte le produit plat (14) au niveau de ses bords latéraux face à face.

12. Dispositif selon l'une quelconque des revendications précédentes, **caractérisé en ce qu'**au niveau de l'extrémité inférieure de la cage d'empilage (20) est prévu un dispositif de réception de la pile de produits (42) et **en ce que** les palettes (30) franchissent le dispositif de réception sans collision.

13. Dispositif selon la revendication 12, **caractérisé en ce que** le dispositif de réception comporte un serre-flan pour la pile de produits (42).

14. Dispositif selon l'une quelconque des revendications précédentes, **caractérisé en ce que** la cage d'empilage (20) comporte des barres de guidage dépliables pour la pile de produits (42) dans la zone de ses ouvertures de prélèvement.
